# EUROPÄISCHE PATENTANMELDUNG

(11) **EP 2 003 720 A1**
(43) Veröffentlichungstag der Anmeldung: **17.12.2008**
(21) Anmeldenummer: 08154127.8
(22) Anmeldetag: 07.04.2008
(51) Int. Cl.: H01M 8/04, H01M 8/06

(54) **Reformer-Brennstoffzellen-System**

(30) Priorität: 06.06.2007 DE 102007026350
(71) Anmelder: Bayerische Motoren Werke Aktiengesellschaft, 80809 München (DE)
(72) Erfinder: Hartmann, Lutz, 85232 Bergkirchen (DE)

(57) **Zusammenfassung**

Die Erfindung betrifft ein Reformer-Brennstoffzellen-System, bei welchem einer Brennstoffzelle (2) zur Erzeugung von elektrischer Energie ein Reformat-Gas zugeführt wird, das in einem Reformer (1) insbesondere aus kohlenwasserstoffhaltigem Kraftstoff durch Teil-Oxidation mit Luft, die dem Reformer (1) als mittels eines Gebläses (3) oder dgl. geförderter Zuluftstrom (Z) zugeführt wird, gewonnenen wird, und wobei zumindest eine Teilmenge des aus der Brennstoffzelle abgeführten Restgases von Reformat als Rezirkulationsstrom (R) dem Reformer (1) zusammen mit der Luft neuerlich zugeführt wird. Erfindungsgemäß wird der Rezirkulationsstrom (R) stromauf des die Luft in den Reformer (1) fördernden Gebläses (3) (oder dgl.) dem Reformer-Zuluftstrom (Z) beigemengt und somit durch dieses Gebläse (3) (oder dgl.) dem Reformer (1) zugeführt. Dabei kann der Rezirkulationsstrom (R) und/oder der Reformer-Zuluftstrom (Z) durch eine geeignet abgestimmte statische Drosselstelle oder durch eine variable Drosselstelle (6) geführt sein. Ferner kann der Rezirkulationsstrom (R) vor der Einleitung in den Zuluftstrom (Z) durch einen Wärmetauscher geführt sein, wobei der Wärmetauscher durch konzentrisch angeordnete Rohre gebildet sein kann, in denen der Rezirkulationsstrom (R) und der Reformer-Zuluftstrom (Z) getrennt voneinander geführt sind.

## Beschreibung

Die Erfindung betrifft ein Reformer-Brennstoffzellen-System, bei welchem einer Brennstoffzelle zur Erzeugung von elektrischer Energie ein Reformat-Gas zugeführt wird, das in einem Reformer insbesondere aus kohlenwasserstoffhaltigem Kraftstoff durch Teil-Oxidation mit Luft, die dem Reformer als mittels eines Gebläses oder dgl. geförderter Zuluftstrom zugeführt wird, gewonnenen wird, und wobei zumindest eine Teilmenge des aus der Brennstoffzelle abgeführten Restgases von Reformat als Rezirkulationsstrom dem Reformer zusammen mit der Luft neuerlich zugeführt wird. Zum bekannten Stand der Technik wird bspw. auf die DE 10 2004 002 337 A1 verwiesen.

Ein solches Reformer-Brennstoffzellen-System kann bspw. in einem Kraftfahrzeug als sog. APU (= Auxiliary Power Unit) Verwendung finden. Dabei ist die Brennstoffzelle als dem Fachmann bekannte sog. SOFC (solid oxid fuel cell = Festoxid-Brennstoffzelle) ausgebildet und kann mit sog. Reformat-Gas betrieben werden, welches in einem Reformer aus konventionellen Kraftstoffen für Kraftfahrzeuge (also bspw. Diesel oder Benzin, allgemein CₙHₘ) gewonnen wird bzw. wurde. Ein derartiger Kraftstoff-Reformer, der der Brennstoffzelle vorgeschaltet ist, setzt bei hohen Temperaturen (in der Größenordnung von 750°C bis 900°C) Kraftstoffe mittels partieller Oxidation in sog. Reformat-Gas oder Synthesegas um. Bei der dieser Umsetzung zugrunde liegenden partiellen Oxidation, die zumeist katalytisch unterstützt ist, wird der Kraftstoff mit zu geringer Luftmenge teilverbrannt; das Verbrennungsluftverhältnis λ liegt dabei in der Größenordnung von 0,35 bis 0,55, d.h. der Reformer verbrennt stark fettes Gemisch.

Für die Prozesssicherheit des Reformers sind die Betriebsgrenzen des Verbrennungsluftverhältnisses sehr genau einzustellen, da eine zu geringe Luftdosierung zu unerwünschten Nebenreaktionen, wie insbesondere Rußbildung, führt. Zu hohe Luftverhältnisse führen aufgrund der exothermen Reformierungsreaktion zu einer thermischen Überbelastung des Reformierungs-Katalysators und damit zu dessen Degradation. Daher werden derartige Reforrner-Brennstoffzellen-Systeme mit sog. Teil-Rezirkulation des in der Brennstoffzelle oxidierten Reformat-Gases betrieben. Hierbei werden Teilmengen des der Brennstoffzelle zugeführten Reformatgases nach Austritt aus der Brennstoffzelle wieder dem Reformer zugeführt. Das derart zugeführte hier sog. Rezirkulat, das dem Reformer in Form eines hier sog. Rezirkulationsstroms wieder zugeführt wird, dient sowohl einer Reduktion der Temperaturen im Reformer als auch einer Absenkung der Rußbildungsneigung im Reformer und somit der Erhöhung von dessen Lebensdauer. Mit entscheidend für diese Prozessverbesserung ist dabei der durch die Brennstoffzellenreaktion, nämlich der Oxidation von Wasserstoff zu Wasserdampf, gesteigerte Wasserdampfgehalt im Rezirkulat, verglichen zum Ausgangs-Reformat, d.h. im Vergleich zum Reformat-Gas. Dieser zurückgeführte Wasserdampf begünstigt eine endotherme Dampfreformierungsreaktion im Reformer, durch die die Prozesstemperatur im Reformer abgesenkt und zugleich die Bildung von Kohlenstoff unterdrückt bzw. zumindest nennenswert behindert wird.

Um eine derartige Rezirkulation von Restgas aus der Brennstoffzelle, welches auch als Anodenabgas (oder allgemein Elektrodenabgas) bezeichnet werden kann, in einem Reformer-Brennstoffzellen-System darzustellen, wird im Stand der Technik der Rezirkulationsstrom (von Restgas) durch ein Gebläse oder einen Verdichter (letzterer soll im Rahmen der vorliegenden Erfindung auch unter den Begriff eines Gebläses fallen) von der Brennstoffzeflen-Austrittsseite zur Eintrittsseite des Reformers transportiert.

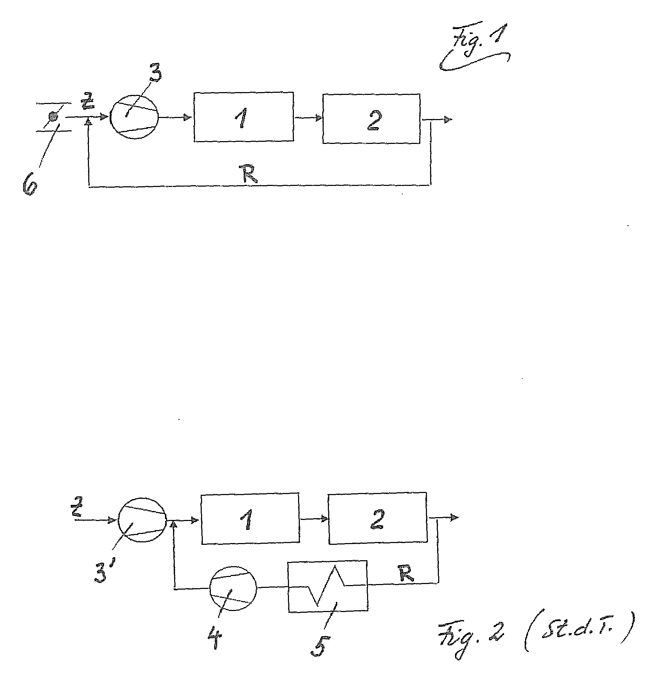

Dies ist in der als Figur 2 beigefügten Prinzipskizze als Stand der Technik vereinfacht dargestellt. Dabei ist ein Reformer mit der Bezugsziffer 1 und die Brennstoffzelle (bzw. deren Elektrode oder Anode, der das im Reformer gewonnene Reformat-Gas zugeführt wird) mit der Bezugsziffer 2 gekennzeichnet. Ein Zuluft-Gebläse, über welches dem Reformer 1 ein Zuluftstrom Z zugeführt wird, trägt die Bezugsziffer 3', während das bereits genannte Gebläse (oder dgl.) zur Förderung des Rezirkulationsstromes R von Restgas aus der Brennstoffzelle 2 zurück in den Reformer 1 mit der Bezugsziffer 4 gekennzeichnet ist.

Aufgrund der hohen Gastemperaturen stromab der Brennstoffzelle, d.h. nach der Brennstoffzellen-Reaktion, die in der Größenordnung von 750°C bis 850°C liegen, ist eine Abkühlung des rezirkulierten Restgases, d.h. des Rezirkulationsstromes R vor Eintritt desselben in das Gebläse 4 erforderlich. Hierfür ist ein Wärmetauscher 5 vorgesehen, der zusammen mit seiner Temperatursteuerung (nicht gezeigt) den Systemaufwand deutlich erhöht. Bezüglich dieses Wärmetauschers 5 sind die Werkstoff-Anforderungen aufgrund der vorliegenden Temperaturen sowie der stark korrosiven Atmosphäre sehr hoch. Ebenso ist die Darstellung des für die Rezirkulation erforderlichen Gebläses 4 aufgrund seiner Anforderungen an die Atmosphäre und die Temperatur zur Vermeidung von Taupunktunterschreitung mit erhöhtem Aufwand (bspw. gesteigerten Systemkosten) verbunden.

Eine Abhilfemaßnahme für diese geschilderte Problematik aufzuzeigen, ist Aufgabe der vorliegenden Erfindung.
Die Lösung dieser Aufgabe ist für ein Reformer-Brennstoffzellen-System nach dem Oberbegriff des Anspruchs 1 dadurch gekennzeichnet, dass der Rezirkulationsstrom stromauf des die Luft in den Reformer fördernden Gebläses (oder dgl.) dem Reformer-Zuluftstrom beigemengt und somit durch dieses Gebläse (der dgl.) dem Reformer zugeführt wird.

im erfindungsgemäßen System bzw. Betriebsverfahren, als welches die vorliegende Erfindung auch beschrieben sein kann, werden die im Stand der Technik vorliegenden Nachteile umgangen, indem das aus der Brennstoffzelle (2) austretende und in den Reformer (1) zurückzuführende Anodenabgas, d.h. der sog. Rezirkulationsstrom (R), zusammen mit der Reformer-Zuluftstrom (Z) über ein gemeinsames (einziges) Gebläse angesaugt und dem Reformer (1) zugeführt wird. Diese gemeinsame einzige Gebläse ist in der beigefügten Figur 1, die in Anlehnung an die bereits erläuterte und den Stand der Technik wiedergebende Figur 2 ebenso einfach dargestellt ein bevorzugtes Ausführungsbeispiel der vorliegenden Erfindung zeigt, mit der Bezugsziffer 3 gekennzeichnet. Vorteilhafterweise kann hiermit nicht nur ein separates, für den Rezirkulationsstrom R eigens vorgesehenes Gebläse (Bezugziffer 4 in Fig.2) entfallen, sondern es kann zumeist auch der bislang für die Kühlung des Rezirkulationsstromes R benötigte Wärmetauscher (Bezugsziffer 5 in Fig.2) entfallen. Durch die Mischung des Zuluftstromes Z mit dem Rezirkulationsstrom R (d.h. durch die Mischung der beiden Gase Luft und Rezirkulat) ergibt sich nämlich entsprechend dem Mischungsverhältnis eine Gastemperatur, die deutlich niedriger ist als die Temperatur des rezirkulierten Restgases (R).

Zur unabhängigen Dosierung der beiden Volumenströme, nämlich des Zuluftstromes Z und des Rezirkulationsstromes R, kann auf der Luftansaugseite des Gebläses 3 eine Dosiereinrichtung in Form einer variablen Drosselstelle 6 (bspw. als Drosselklappe oder als Ventil ausgebildet) vorgesehen sein, durch die der Zuluftsrom Z hindurch geführt ist. Alternativ oder zusätzlich kann eine solche Drosselstelle auch für den Rezirkulationsstrom R vorgesehen sein. Falls ein annähernd konstantes Mischungsverhältnis beider Volumenstöme, nämlich des Zuluftstromes Z und des Rezirkulationsstromes R für den Betrieb des Reformers 1 ausreichend ist, kann dieses Mischungsverhältnis auch durch eine geeignet abgestimmte statische Drosselstelle vorzugsweise für den Rezirkulationsstrom R, durch welche dieser also hindurchgeführt ist, eingestellt sein oder werden.

Die Einleitung des Rezirkulationsstromes R in den Zuluftstrom Z sollte konstruktiv derart ausgeführt sein, dass durch eine schnelle Homogenisierung eine Zündung beider Gase ausgeschlossen werden kann. Gegebenfalls kann es sinnvoll sein, den Rezirkulationsstrom R (bzw. das zurückzuführende Restgas) vor der Mischung mit der frischen Zuluft Z des Reformes 1 in einem Wärmetauscher (in der Fig.1 nicht dargestellt) auf einen Temperaturwert unterhalb seiner Zündtemperatur abzukühlen. Vorzugsweise kann eine Kühlung des Rezirkulationsgasstromes R durch den Reformer-Zuluftstrom Z selbst erfolgen, indem diese beiden Gasströme in abschnittsweise konzentrisch zueinander verlaufenden Rohren geführt sind.

Ein erfindungsgemäßes Reformer-Brennstoffzellen-System zeichnet sich durch einen verringerten Aufwand sowohl hinsichtlich der benötigten Komponenten bzw. Bauteile als auch hinsichtlich des Regelaufwandes aus. Vorteilhafterweise ergibt sich eine gesteigerte Betriebssicherheit durch Vermeidung von Verschmutzung und Kondensation an einem im Stand der Technik erforderlichen Rezirkulations-Wärmetauscher (Bezugsziffer 5 in Fig.2) und einem im Stand der Technik separaten Rezirkulations-Gebläse (Bezugsziffer 4 in Fig.2), wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Reformer-Brennstoffzellen-System, bei welchem einer Brennstoffzelle (2) zur Erzeugung von elektrischer Energie ein Reformat-Gas zugeführt wird, das in einem Reformer (1) insbesondere aus kohlenwasserstoffhaltigem Kraftstoff durch Teil-Oxidation mit Luft, die dem Reformer (1) als mittels eines Gebläses (3) oder dgl. geförderter Zuluftstrom (Z) zugeführt wird, gewonnenen wird, und wobei zumindest eine Teilmenge des aus der Brennstoffzelle (2) abgeführten Restgases von Reformat als Rezirkulationsstrom (R) dem Reformer (1) zusammen mit der Luft neuerlich zugeführt wird,
**dadurch gekennzeichnet, dass** der Rezirifulationsstrom (R) stromauf des die Luft in den Reformer fördernden Gebläses (3) oder dgl. dem Reformer-Zuluftstrom (Z) beigemengt und somit durch dieses Gebläse (3)oder dgl. dem Reformer (1) zugeführt wird.

2. Reformer-Brennstoffzellen-System nach Anspruch 1, wobei der Rezirkulationsstrom (R) und/oder der Reformer-Zuluftstrom (Z) durch eine geeignet abgestimmte statische Drosselstelle oder durch eine variable Drosselstelle (6) geführt ist/sind.

3. Reformer-Brennstoffzellen-System nach Anspruch 1 oder 2, wobei der Rezirkulationsstrom (R) vor der Einleitung in den Zuluftstrom (Z) durch einen Wärmetauscher geführt ist.

4. Reformer-Brennstoffzellen-System nach Anspruch 3, wobei der Wärmetauscher durch konzentrisch angeordnete Rohre gebildet ist, in denen der Rezirkulationsstrom (R) und der Reformer-Zuluftstrom (Z) getrennt voneinander geführt sind.
